# EUROPÄISCHE PATENTSCHRIFT

(11) **EP 0 958 734 B1**
(45) Veröffentlichungstag und Bekanntmachung des Hinweises auf die Patenterteilung: **07.08.2002**
(21) Anmeldenummer: 99109011.9
(22) Anmeldetag: 06.05.1999
(51) Int. Cl.: A01F 15/07

(54) **Rundballenpresse für landwirtschaftliches Erntegut.**
Round bale press for agricultural products
Presse à balles rondes pour produits agricoles

(30) Priorität: 19.05.1998 DE 19822359
(43) Veröffentlichungstag der Anmeldung: 24.11.1999
(73) Patentinhaber: Usines Claas France, 57148 Woippy (FR)
(72) Erfinder: Roth, Arséne, 57050 Metz (FR); Guthmann, Peter, 57000 Metz (FR); Wegert, Ralf., 49849 Wilsum (DE)
(74) Vertreter: Weeg, Thomas

(56) Entgegenhaltungen:
- DE-U- 8 527 482
- DE-U- 8 627 212
- FR-A- 2 604 856
- US-A- 5 216 873

## Beschreibung

Die Erfindung betrifft eine Rundballenpresse für landwirtschaftliches Erntegut mit einem von seitlichen Stirnwänden und umfangseitig von durch Preßkammerbändem oder sonstigen antreibbaren Wickelelementen begrenzten Preßraum, mit einer Abwickelstation und Umlenkwalzen für bahnförmiges Umhüllmaterial für den fertiggewickelten Rundballen, mit einem von dem Wickelvorgang gesteuerten Vorzug für das Umhüllmaterial, sowie einer Schneideinrichtung und einer Bremseinrichtung zum Regeln der Bahnspannung des Umhüllmaterials, wobei eine Walze des Vorzuges mittels einer Naben-Wellenverbindung mit einem kurzzeitig anhaltbaren Blockierelement einer Blockiereinrichtung gekoppelt ist.

Bei der Rundballenpresse der vorstehenden Art, siehe z.B. DE-U-8627212, steht die Vorzugsrolle zum Abziehen des Umhüllmaterials von einer Rolle während der Bildung des Rundballens still. Nachdem der Rundballen fertig gewickelt ist, wird der gesteuerte Antrieb für die Vorzugswalze eingeschaltet. Das Ende des Umhüllmaterials wird dann zum Rundballen transportiert. Sobald das bahnförmige Umhüllmaterial durch den Rundballen mitgenommen wird, wird die Geschwindigkeit des Umhüllmaterials erhöht. Deshalb ist der Antrieb für die Vorzugswalze mit einer Überholkupplung ausgestattet. Die Schneideinrichtung für das bahnförmige Material wird von dem Wickelvorgang des Umhüllmaterials gesteuert. Dies erfolgt beispielsweise durch ein Zählwerk, welches nach einer vorgegebenen Anzahl von Umdrehungen des Rundballens nach Mitnahme des Umhüllmaterials ein Signal auslöst, wodurch die Schneideinrichtung betätigt wird. Für einen sauberen Schnitt, bei dem das Umhüllmaterial, welches aufgrund der netzförmigen Ausbildung schwierig zu schneiden ist, vollständig abgetrennt wird, ist es erforderlich, daß die Bahnspannung während des Schneidvorganges relativ hoch ist. Beim Zuführen des Anfangs des Umhüllmaterials soll zunächst keine Bremsung erfolgen, das heißt. die Bahnspannung ist praktisch nicht vorhanden oder äußerst gering, da nur die Momente der Walzen überwunden werden müssen. Bei der Mitnahme des Umhüllmaterials durch den Rundballen ist zur straffen Umwicklung eine bestimmte Bahnspannung notwendig, die unter Umständen während des Abschneidevorganges noch deutlich erhöht werden muß. Die Bremseinrichtungen können verschiedenartig ausgebildet sein. So kann die Bremsung in Abhängigkeit von den für den Antrieb der Vorzugswalze des Vorzugs erforderlichen Drehmoment gesteuert werden. Ferner ist es bekannt, daß direkt auf die Rolle des Umhüllmaterials eine Bremseinrichtung wirkt. Es ist ferner bekannt, daß die Bremsung der Bahn des Umhüllmaterials von der Geschwindigkeit des Umhüllmaterials durch eine entsprechend ausgelegte Bremse erfolgt.

Um die Bahnspannung während des Abschneidens des Umhüllmaterials deutlich zu erhöhen, ist es bekannt, insbesondere die Vorzugswalze des Vorzugs mit dem Blockierelement einer Blockiereinrichtung zu koppeln. Dieses Blockierelement kann beispielsweise ein Klinkenrad sein, welches mit der Walze rotiert. Dadurch wird diese Walze kurzzeitig stillgesetzt, so daß das Umhüllmaterial über die stillstehende Walze gezogen wird, wodurch die Bahnspannung extrem erhöht wird.

Obwohl dadurch ein exaktes Abschneiden des bahnförmigen Umhüllmaterials gewährleistet ist, ist es unvermeidbar, daß der Anfang des abgeschnittenen Umhüllmaterials am Messer der Schneideinrichtung anhaftet. Dies sind in der Praxis nur wenige Fäden. Dies führt jedoch dazu, daß beim nächsten Wickelvorgang der freihängende Anfang des Umhüllmaterials nicht mehr ordnungsgemäß dem Rundballen zugeführt werden kann. Dadurch kommt es zu Betriebsstörungen, da sich das mittels der Vorzugswalze antransportierte Umhüllungsmaterial in den durch Walzen oder Bändern begrenzten Transportweg unkontrolliert ablegt.

Ferner ist noch nachteilig, daß beim Anhalten des Blockierelementes die angrenzenden Bauteile kurzzeitig jedoch momentan extrem stark belastet werden.

Der Erfindung liegt die Aufgabe zugrunde, eine Rundballenpresse der eingangs näher beschriebenen Art auf konstruktiv einfache Weise so zu gestalten, daß nach dem Abschneiden das Umhüllmaterial frei beweglich herunterhängt.

Die gestellte Aufgabe wird gelöst, indem die Naben-Wellenverbindung der Vorzugswalze für das Blockierelement wenigstens ein elastisches Mitnahmeelement enthält, so daß während des kurzzeitigen Anhaltens des Blockierelementes zumindest die Walze um einen relativ kleinen Winkel in Laufrichtung des Umhüllmaterials verdrehbar ist.

Solange das Blockierelement sich ungehindert mit der zugehörigen Walze drehen kann, wird das elastische Mitnahmeelement oder werden die elastischen Mitnahmeelemente, wenn überhaupt, nur durch das zu übertragende Drehmoment verformt. Sobald jedoch durch Anhalten des Blockierelementes die Drehung der zugehörigen Walze unterbunden wird, kann sie sich nunmehr jedoch noch um einen relativ kleinen Winkel gegenüber dem Blockierelement verdrehen. Dies erfolgt ausschließlich durch die noch durch den Rundballen vorgezogene Bahn des Umhüllmaterials. Sobald jedoch das Umhüllmaterial abgeschnitten ist, entfällt die bis dahin auf das Umhüllmaterial wirkende Zugkraft. Durch die Verformung der Mitnahmeelemente während des Vorziehens des Umhüllmaterials werden Rückstellkräfte aufgebaut, die unmittelbar nach dem Abschneiden bewirken, daß sich die Walze entgegen der vorherigen Laufrichtung des Umhüllmaterials zurückdreht. Dadurch wird verhindert, daß auch nur wenige Fäden an dem Schneidmesser der Schneideinrichtung anhaften. Für den nächstfolgenden Wickelvorgang wird dann der Anfang des Umhüllmaterials entlang des vorgesehenen Weges durch die angetriebene Vorzugswalze vorgeschoben. Da sich beim Anhalten des Blockierelementes die Walze noch ein klein wenig verdrehen kann, wirken die Mitnahmeelemente dämpfend. Dadurch werden die extremen, momentanen Belastungen deutlich herabgesetzt.

In weiterer Ausgestaltung ist vorgesehen, daß die Naben-Wellenverbindung im wesentlichen aus einem fest mit dem Blockierelement oder der zugehörigen Walze verbundenen Rohrabschnitt, einem innerhalb des Rohrabschnittes liegenden, fest mit der Welle verbundenen Innenkörper und ein oder mehreren elastischen Mitnahmelementen besteht, die in Hohlräume zwischen dem äußeren Rohrabschnitt und dem Innenkörper schließend eingesetzt sind. Dadurch wird eine konstruktiv einfache und kompakte Bauweise erreicht. Damit das zu übertragende Drehmoment durch eine ausreichende Anzahl von Mitnahmeelementen erfolgen kann, ist es zweckmäßig, wenn der Rohrabschnitt einen quadratischen Querschnitt aufweist, und daß die Außenfläche des Innenkörpers quadratisch ausgebildet ist, wobei die Außenflächen des Innenkörpers unter einem Winkel von 45 Grad zu den Innenflächen des quadratischen Rohrabschnittes stehen. Durch diese Gestaltung werden vier im Querschnitt etwa dreieckförmige Hohlräume gebildet, in die die Mitnahmeelemente schließend eingesetzt werden können.

Die Mitnahmeelemente können so gestaltet sein, daß sie unverformt bleiben oder nur geringfügig verformt werden, wenn die Walzen bzw. das Blockierelement zum Vorschub des Umhüllmaterials angetrieben wird. Der Aufbau von Rückstellkräften erfolgt durch das Anhalten des Blockierelementes. Zweckmäßigerweise sind die Diagonalen des quadratischen Innenkörpers in etwa so lang oder geringfügig kürzer wie die Abstände der parallelen Flächen des äußeren Rohrabschnittes. Dadurch entstehen im wesentlichen geschlossene Hohlräume für die Mitnahmeelemente. Die Kanten des Innenkörpers sind zweckmäßigerweise gebrochen. Die Mitnahmeelemente bestehen in vorteilhafter Weise aus jeweils einem Strang aus einem elastisch verformbaren Material, beispielsweise aus Gummi oder einem gummiähnlichen Kunststoff. Dadurch werden zunächst die Hohlräume weitgehend ausgefüllt. Außerdem wird eine relativ hohe Lebensdauer für die Mitnahmeelemente erreicht.

Anhand der beiliegenden Zeichnungen wird die Erfindung noch näher erläutert.
Es zeigen:
- Figur 1: eine erfindungsgemäße Rundballenpresse in einer Seitenansicht, rein schematisch,
- Figur 2: die mit der Blockiereinrichtung gekoppelte Vorzugswalze als Einzelheit,
- Figur 3: die Naben-Wellenverbindung für die Rundballenpresse nach der Fig. 1 in einer Stirnansicht,
- Figur 4: die Naben-Wellenverbindung nach der Fig. 3 im Aufriß,
- Figur 5: eine Einzelheit der Rundballenpresse gemäß der Fig. 1, die Antriebsanordnung der Vorzugswalze zeigend und
- Figur 6: die Schneideinrichtung der Rundballenpresse nach der Fig. 1 in einer gegenüber der Fig. 2 geänderten Ausführung.

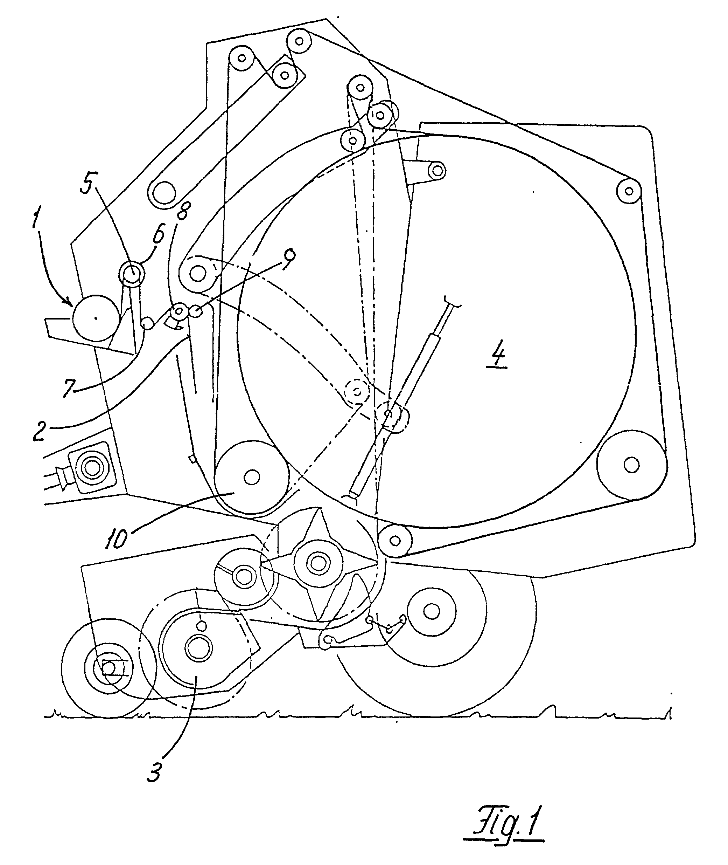

Die in der Fig. 1 dargestellte Rundballenpresse ist mit einer Abwickelstation 1 für eine Bahn 2 eines Umhüllungsmaterials aus einem netzartigen Material versehen, die, in Vorwärtsfahrtrichtung der Rundballenpresse gesehen, im vorderen Bereich oberhalb der Pick-Up 3 dem Preßraum 4 gegenüberliegt. Oberhalb der Abwickelstation 1 ist eine Umlenkrolle 5 frei drehbar gelagert, der eine nicht näher erläuterte Bremseinrichtung 6 zugeordnet ist. Die Bahn 2 wird dann über eine weitere Umlenkwalze 7 geführt, der eine angetriebene Vorzugswalze 8 nachgeschaltet ist, die mit einer Gegenrolle 9 zusammenwirkt. Der nicht dargestellte Antrieb der Vorzugswalze 8 zieht die Bahn 2 vor, um sie dem Preßraum 4 bzw. dem Rundballen zuzuführen. Da die Geschwindigkeit bei Mitnahme durch den Rundballen erhöht wird, ist der Antrieb mit einer Überholkupplung ausgestattet. Die Schneideinrichtung ist direkt der Vorzugswalze 8 zugeordnet. Den Einlauf für das Erntegut in den Preßraum 4 bildet eine Bänderwalze 10, die der Pickup 3 zugeordnet ist. Nach dem Einleiten des Bimdevorganges gelang der Anfang der Bahn 2 durch das Einschalten der Vorzugswalze 8 über Leitbleche in einen Einlaufspalt, der durch die Bänderwalze 10 und den entsprechend geformten Bereich der Einlaufbleche gebildet ist. Der fertig gewickelte Rundballen wird dann mit drei bis vier Lagen des Umhüllmaterials umgeben und zieht dieses selbsttätig mit. Die Anzahl der Lagen wird durch ein mit der Gegenrolle 9 kombiniertes Zählwerk kontrolliert, welches ein Signal zum Auslösen der Schneideinrichtung gibt.

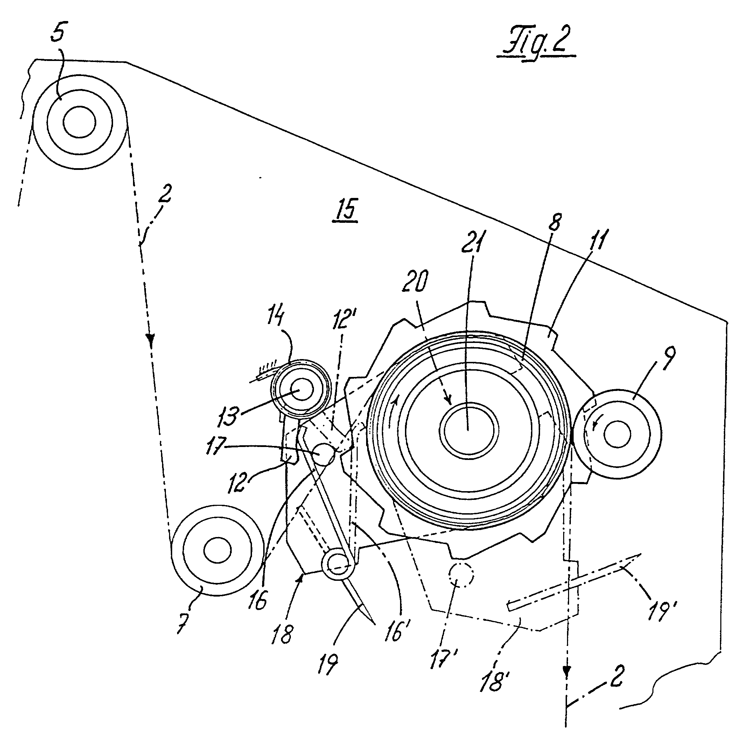

Die Blockiereinrichtung gemäß der Fig. 2 besteht im wesentlichen aus einem Bremsrad in Form eines Klinkenrades 11, einem damit in Eingriff bringbaren Sperrhebel 12, der um eine zur Drehachse der Vorzugswalze 8 bzw. des Klinkenrades 11 achsparallelen Achse 13 schwenkbar und durch eine Drehfeder 14 belastet ist. Ferner enthält die Blockiereinrichtung noch eine am ortsfesten Gestell 15 schwenkbar angeordnete Klinke 16, deren freies Ende in der Freigabestellung des Klinkenrades 11 sich an einem Anschlag 17 abstützt. Dieser Anschlag 17 ist an der schwenkbaren Schneideinrichtung 18 angeordnet. Die Schneideinrichtung 18 ist bei dieser Ausführung um die Drehachse der Vorzugswalze 8 bzw. des Klinkenrades 11 schwenkbar.

Wie sich aus der Fig. 2 ergibt, wird beim Auslösen der Schneideinrichtung 18 das Schneidmesser 19 durch die Bahn 2 hindurchgeführt und trennt diese. Diese Stellung ist in der Fig. 2 durch das Bezugszeichen 19' bzw. 18' gekennzeichnet. Der Anschlag 17 schwenkt dann in die Stellung 17', so daß die Klinke 16 in die Stellung 16' verfährt. Der Sperrhebel 12 greift dann in das Klinkenrad 11 ein, wie durch das Bezugszeichen 12' gekennzeichnet ist. In dieser Stellung ist die Drehung der Vorzugswalze 8 blockiert. Diese Blockade erfolgt, bevor das Schneidmesser 19 in die Bahn 2 eintaucht. Die Bahn 2 wird durch den sich drehenden Rundballen über die Vorzugswalze 8 gezogen, so daß die Bahnspannung der Bahn 2 extrem erhöht wird. Die Bahn 2 kommt sofort zum Stillstand, wenn der Sperrhebel 12 in das Klinkenrad 12 in das Klinkenrad 11 eingreift und danach das Schneidmesser 19 die Bahn 2 durchtrennt.

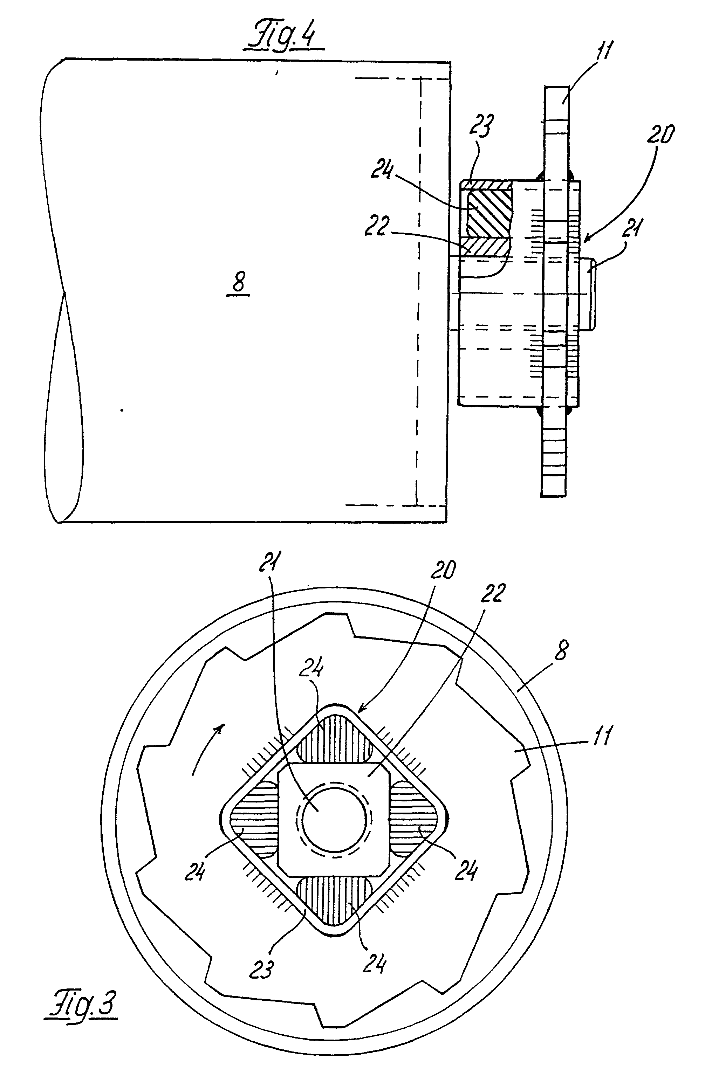

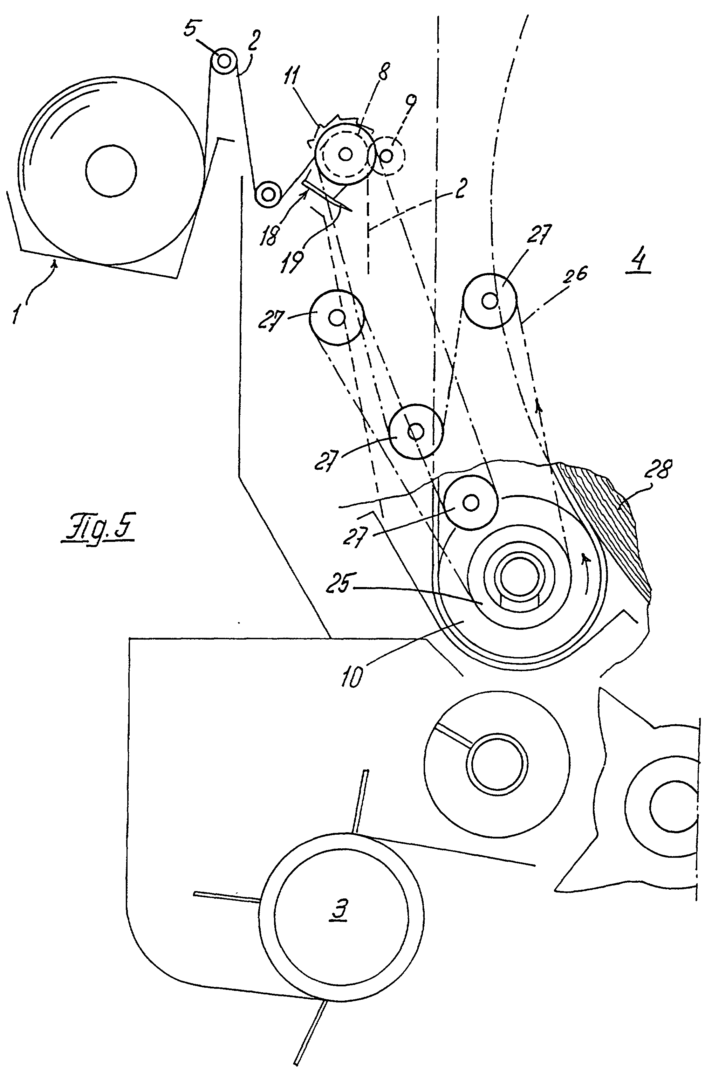

In den Fig. 3 und 4 ist eine bevorzugte Ausführungsform der Naben-Wellenverbindung 20 der erfindungsgemäßen Rundballenpresse dargestellt. Auf eine Antriebswelle 21, die von einem in Figiur 5 dargestellten, mit einer Überholkupplung ausgerüsteten Antrieb rotierend antreibbar ist, ist ein Innenkörper 22 drehfest aufgesetzt. Der Innenkörper 22 hat eine quadratische Außenfläche, wobei die Kanten abgeflacht sind. Im gezeichneten Ausführungsbeispiel ist das Klinkenrad 11 mit einer quadratischen Bohrung versehen, in die ein Rohrabschnitt 23 mit quadratischem Querschnitt fest eingesetzt ist. Die beiden Diagonalen des Innenkörpers 22 entsprechen mit ihren Längen in etwa dem Abstand von zwei parallelen Flächen des Rohrabschnittes 23.

Die Außenflächen des Innenkörpers 22 stehen unter einem Winkel von 45 Grad zu den Innenflächen des Rohrabschnittes 23. Dadurch entstehen zwischen den Außenflächen des Innenkörpers 22 und den Innenflächen des Rohrabschnittes 23 in etwa dreieckförmige Hohlräume, in die strangförmige Mitnahmeelemente 24 aus einem elastischen Material schließend eingesetzt sind.

Im dargestellten Ausführungsbeispiel ist die mit den elastischen. Mitnahmeelementen 24 ausgestattete Naben-Wellenverbindung 20 der Vorzugswalze 8 zugeordnet. Sie könnte auch den anderen Walzen des Walzensystems funktionell zugeordnet werden. Im dargestellten Ausführungsbeispiel ist die Vorzugswalze 8 drehfest auf die Welle 21 aufgesetzt. Es wäre auch eine Kopplung mit dem Klinkenrad 11 denkbar, wobei die Koppelelemente elastisch sein müßten.

Es ergibt sich aus den Fig. 3 und 4, daß die Vorzugswalze 8 noch um einen relativ geringen Winkel in Laufrichtung der Bahn 2 gedreht wird, wenn der Sperrhebel 12 in das Klinkenrad 11 eingreift. Dadurch werden die elastischen Mitnahmeelemente 24 unter Bildung von Rückstellkräften verformt. Sobald die Bahn 2 mittels der schwenkbaren Schneideinrichtung 18 durchgetrennt ist, wird die Vorzugswalze 8 entgegen der Laufrichtung der Bahn 2 durch Freigabe der Rückstellkräfte zurückgedreht. Dadurch zieht sie das vordere, abgeschnittene Ende der Bahn 2 vom Schneidmesser 19 weg. Ein eventuelles Anhaften von einzelnen Fäden des Umhüllmaterials am Schneidmesser 19 wird wirksam verhindert. Außerdem wird die stoßartige Belastung der dem Klinkenrad 11 funktionell zugeordneten Teile wesentlich herabgesetzt.

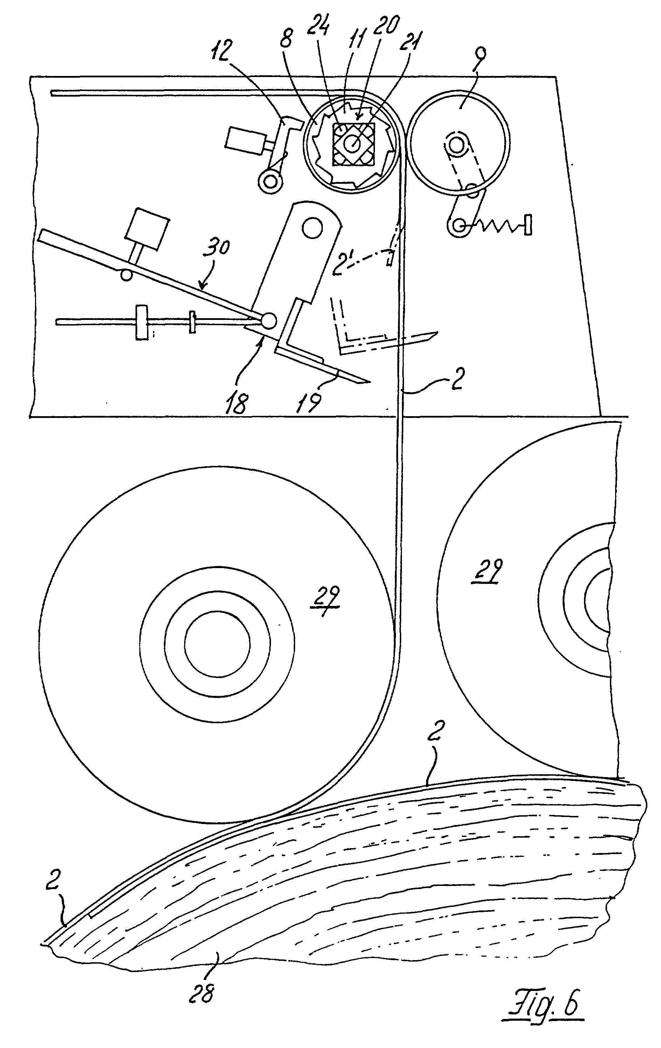

Die Fig. 5 zeigt, daß auch bei dieser Ausführung die Schneideinrichtung 18 um die Welle 21 schwenkbar gelagert ist. Außerdem zeigt sie, daß auf die Wellen der Bänderwalze 10 eine Riemenscheibe 25 drehfest aufgesetzt ist. Der Antrieb der Vorzugswalze 8 erfolgt über einen Riemen 26, der über vier Umlenkrollen 27 geführt ist.

In der Fig. 6 ist dargestellt, wie ein fertiggewickelter Rundballen 28 mit dem Umhüllmaterial mehrmals umwickelt wird. Wenn nach Fertigstellung des Rundballens 28 der nicht dargestellte Antrieb für die Vorzugswalze 8 eingeschaltet wird, wird der Anfang der Bahn 2 senkrecht nach unten geschoben und gelangt in den Walzenspalt von zwei den Preßraum 4 rundum begrenzenden Trommeln 29. Da sich der Rundballen 28 dreht gelangt das Ende der Bahn 2 zwischen den Rundballen 28 und einer der Trommeln 29, so daß das Umhüllmaterial mitgenommen wird. Damit das Umhüllmaterial straff gewickelt wird, wird die Bahn 2 mittels der nicht näher erläuterten Bremseinrichtung 6 unter Spannung gehalten. Sobald der Schwenkantrieb 30 für die Schneideinrichtung 18 angesteuert wird, erfolgt das schlagartige Durchtrennen der Bahn 2. Zuvor wurde jedoch der Sperrhebel 12 in das Klinkenrad 11 eingefahren. Dadurch erfolgt eine extreme Spannungserhöhung der Bahn 2.

Die Ausführung nach der Fig. 6 unterscheidet sich von den anderen Ausführungen dadurch, daß die Schneideinrichtung 18 um eine Achse schwenkbar ist, die unterhalb der Welle 21 und in einem Versatz zu dieser steht. Außerdem ist der Sperrhebel 12 winkelartig gestaltet und mit einem Stelltrieb ausgerüstet. Das Ende der abgeschnittenen Bahn 2 ist strichpunktiert angedeutet und durch das Bezugszeichen 2' gekennzeichnet. Die Fig. zeigt deutlich, daß nach dem Abschneiden der Bahn 2 das Ende 2' im Abstand zum Schneidmesser 19 steht, bedingt durch die Rückdrehung der Vorzugswalze 8. Außerdem zeigt die Fig. 6, daß die Gegenrolle 9 durch Federkraft an die Vorzugswalze 8 angedrückt wird.

Die Erfindung ist nicht auf die dargestellten Ausführungsbeispiele beschränkt. Wesentlich ist, daß durch die elastischen Mitnahmeelemente 24 beim Anhalten des Klinkenrades 11 die Vorzugswalze 8 oder eine andere dem Klinkenrad 11 zugeordnete Walze sich noch ein klein wenig drehen kann, und daß durch die aufgebauten Rückstellkräfte nach dem Durchtrennen der Bahn 2 die besagte Walze zurückgedreht wird, und daß sich dabei das vordere, freie Ende der Bahn vom Schneidmesser 19 entfernt.

### Bezugszeichenliste

- 1: Abwickelstation
- 2: Bahn/Bahnanfang
- 3: Pickup
- 4: Preßraum
- 5: Umlenkrolle
- 6: Bremseinrichtung
- 7: Umlenkwalze
- 8: Vorzugswalze
- 9: Gegenrolle
- 10: Bänderwalze
- 11: Klinkenrad
- 12: Sperrhebel
- 13: achsparallele Achse
- 14: Drehfeder
- 15: Gestell
- 16: Klinke
- 17: Anschlag
- 18: schwenkbare Schneideinrichtung
- 19: Schneidmesser
- 20: Naben-Wellenverbindung
- 21: Welle
- 22: Innenkörper
- 23: Rohrabschnitt
- 24: Mitnahmeelemente
- 25: Riemenscheibe
- 26: Riemen
- 27: Umlenkrollen
- 28: Rundballen
- 29: Trommel
- 30: Schwenkeinrichtung

## Patentansprüche

1. Rundballenpresse für landwirtschaftliches Erntegut mit einem von seitlichen Stirnwänden und umfangseitig von durch Preßkammerbändern oder sonstigen antreibbaren Wickelelementen begrenzten Preßraum (4), mit einer Abwickelstation (1) und Umlenkwalzen (5, 7) für bahnförmiges Umhüllmaterial (2) für den fertiggewickelten Rundballen, mit einem von dem Wickelvorgang gesteuerten Vorzug für das Umhüllmaterial sowie einer Schneideinrichtung (18) und einer Bremseinrichtung (6) zum Regeln der Bahnspannung des Umhüllmaterials, wobei eine Walze (8) des Vorzuges mittels einer Naben- Wellenverbindung (20) mit einem kurzzeitig anhaltbaren Blockierelement (11) einer Blockiereinrichtung gekoppelt ist,
**dadurch gekennzeichnet,**
**daß** die Naben-Wellenverbindung (20) der Vorzugswalze (8) für das Blockierelement (11) wenigstens ein elastisches Mitnahmeelement (24) enthält, so daß während des kurzzeitigen Anhaltens des Blockierelementes (11) zumindest die Vorzugswalze (8) um einen relativ kleinen Winkel in Laufrichtung des Umhüllmaterials verdrehbar ist.

2. Rundballenpresse nach Anspruch 1,
**dadurch gekennzeichnet,**
**daß** die Naben- Wellenverbindung (20) im wesentlichen aus einem fest mit dem Blockierelement (11) verbundenem Rohrabschnitt (23), einem innerhalb des Rohrabschnittes (23) liegenden, fest mit der Welle (21) verbundenen Innenkörper (22) und ein oder mehreren elastischen Mitnahmeelementen (24) besteht, die in Hohlräume zwischen dem äußeren Rohrabschnitt (23) und dem Innenkörper (22) schließend eingesetzt sind.

3. Rundballenpresse nach Anspruch 2,
**dadurch gekennzeichnet,**
**daß** der äußere Rohrabschnitt (23) einen quadratischen Querschnitt aufweist, und daß die Außenfläche des Innenkörpers (22) quadratisch ausgebildet ist, wobei die Außenflächen des Innenkörpers (22) unter einem Winkel von 45 Grad zu den Innenflächen des quadratischen Rohrabschnittes (23) stehen.

4. Rundballenpresse nach Anspruch 3,
**dadurch gekennzeichnet,**
**daß** die Diagonalen des quadratischen Innenkörpers (22) den Abständen der parallelen Flächen des äußeren Rohrabschnittes (23) entsprechen oder geringfügig kürzer sind.

5. Rundballenpresse nach einem oder mehreren der vorhergehenden Ansprüche 1 bis 4,
**dadurch gekennzeichnet,**
**daß** jedes Mitnahmeelement (24) aus einem Strang aus einem elastisch verformbaren Material, beispielsweise aus Gummi oder einem gummiähnlichen Kunststoff besteht.

6. Rundballenpresse nach einem oder mehreren der vorhergehenden Ansprüche 1 bis 5,
**dadurch gekennzeichnet,**
**daß** die Schneideinrichtung (18) um eine unterhalb und im Versatz zur Drehachse der Vorzugswalze (8) stehende Achse mittels einer Schwenkeinrichtung (30) schwenkbar ist.

## Claims

1. A round bale press for agricultural crop material comprising a pressing chamber (4) which is delimited by lateral end walls and peripherally by pressing chamber belts or other drivable winding elements, an unwinding station (1) and direction-changing rollers (5, 6) for wrapping material (2) in web form for the round bale in the finished wound condition, a drawing feed means for the wrapping material, controlled by the winding operation, as well as a cutting device (18) and a braking device (6) for regulating the web tension of the wrapping material, wherein a roller (8) of the drawing feed means is coupled by means of a hub-shaft connection (20) to a temporarily stoppable blocking element (11) of a blocking device, **characterised in that** the hub-shaft connection (20) of the drawing feed roller (8) for the blocking element (11) includes at least one elastic entrainment element (24) so that during the temporary stoppage of the blocking element (11) at least the drawing feed roller (8) is rotatable through a relatively small angle in the direction of travel of the wrapping material.

2. A round bale press according to claim 1 **characterised in that** the hub-shaft connection (20) substantially comprises a tubular portion (23) fixedly connected to the blocking element (11), an inner body (22) which is within the tubular portion (23) and fixedly connected to the shaft (21), and one or more elastic entrainment elements (24) which are fitted closingly into cavities between the outer tubular portion (23) and the inner body (22).

3. A round bale press according to claim 2 **characterised in that** the outer tubular portion (23) is of a square cross-section and the outside surface of the inner body (22) is of a square configuration, wherein the outside surfaces of the inner body (22) are at an angle of 45° relative to the inside surfaces of the square tubular portion (23).

4. A round bale press according to claim 3 **characterised in that** the diagonals of the square inner body (22) correspond to or are slightly shorter than the spacings of the parallel surfaces of the outer tubular portion (23).

5. A round bale press according to one or more of preceding claims 1 to 4 **characterised in that** each entrainment element (24) comprises an elongate portion of an elastically deformable material, for example rubber or a rubber-like plastic material.

6. A round bale press according to one or more of preceding claims 1 to 5 **characterised in that** the cutting device (18) is pivotable by means of a pivoting device (30) about an axis which is disposed below and in displaced relationship with the axis of rotation of the drawing feed roller (8).

## Revendications

1. Presse à balles rondes pour produits agricoles avec une chambre de compression (4) qui est délimitée par des parois latérales et à sa périphérie par des bandes ou d'autres éléments de formation des balles entraînés, avec un poste de dévidage (6) et des cylindres de renvoi (5, 7) pour un produit de liage (7) en bande pour les balles rondes terminées, avec un mécanisme de tirage pour le produit de liage commandé par le processus de formation des balles ainsi dispositif de coupe (18) et un dispositif de freinage (6) pour régler la tension de la bande de produit de liage, un cylindre (8) du mécanisme de tirage étant couplé par une liaison de type moyeu-arbre à un élément de blocage pouvant être arrêté un court instant d'un dispositif de blocage (11), **caractérisée en ce que** la liaison moyeu-arbre (20) du cylindre de tirage (8) pour l'élément de blocage (11) comprend au moins un élément d'entraînement (24) élastique tel, que, pendant l'arrêt de courte durée de l'élément de blocage (11), au moins l'élément de tirage (8) puisse tourner d'un angle relativement faible dans la direction de déplacement du produit de liage.

2. Presse à balles rondes selon la revendication 1, **caractérisée en ce que** la liaison moyeu-arbre (20) comprend essentiellement un tronçon de tube (23) qui est solidaire de l'élément de blocage (11), un corps intérieur (22) qui est disposé à l'intérieur du tronçon de tube (23) et est solidaire de l'arbre (21) et un ou plusieurs éléments d'entraînement (24) élastiques qui sont disposés dans des cavités, entre le tronçon de tube extérieur (23) et le corps intérieur (22).

3. Presse à balles rondes selon la revendication 2, **caractérisée en ce que** le tronçon de tube extérieur (23) présente une section carrée et **en ce que** la surface extérieure du corps intérieur (22) est carrée, les surfaces extérieures du corps intérieur (22) formant un angle de 45° avec les surfaces intérieures du tronçon de tube (23) carré.

4. Presse à balles rondes selon la revendication 3, **caractérisée en ce que** les diagonales du corps intérieur (22) carré correspondent aux distances entre les surfaces parallèles du tronçon de tube extérieur (23), ou sont légèrement inférieures à celles-ci.

5. Presse à balles rondes selon une ou plusieurs des revendications précédentes, **caractérisée en ce que** chaque élément d'entraînement (24) est formé d'un barreau de matériau déformable élastiquement, par exemple de caoutchouc ou d'une matière plastique similaire au caoutchouc.

6. Presse à balles rondes selon une ou plusieurs des revendications précédentes, **caractérisée en ce que** le dispositif de coupe (18) peut pivoter autour d'un axe situé en-dessous de l'axe de rotation du cylindre de tirage (8) et décalé par rapport à celui-ci, sous l'action d'un dispositif de basculement (30).
